# EUROPÄISCHE PATENTANMELDUNG

(11) **EP 1 108 936 A2**
(43) Veröffentlichungstag der Anmeldung: **20.06.2001**
(21) Anmeldenummer: 00811151.0
(22) Anmeldetag: 06.12.2000
(51) Int. Cl.: F16L 5/04

(54) **Brandschutzmanschette für Rohre, Kabel und dergleichen**

(30) Priorität: 15.12.1999 DE 19960485
(71) Anmelder: HILTI Aktiengesellschaft, 9494 Schaan (LI)
(72) Erfinder: Münzenberger, Herbert, 65191 Wiesbaden (DE); Arndt, Andresen, 86899 Landsberg (DE); Milhes, Jean-Louis, 6800 Feldkirch (AT)
(74) Vertreter: Wildi, Roland

(57) **Zusammenfassung**

Eine Brandschutzmanschette (1) für ein Rohr, Kabel und dergleichen (T) umfasst ein im wesentlichen rohrförmiges Gehäuse (2) aus Metall, das an einem Längsende einen radial abragenden Anschlussflansch (3) aufweist. Ein axialer Endabschnitt (6) des Gehäuses (2) weist eine hitzeintumeszierende Masse (10) auf, die an der Innenwandung des Gehäuses (2) angeordnet ist und einen axial verlaufenden Durchführungsbereich (9) für das Rohr, Kabel oder dergleichen (T) kreisringförmig umgibt. An dem die hitzeintumeszierende Masse (10) aufweisenden axialen Endabschnitt (6) des Gehäuses (2) sind metallische Lamellen (12) angeordnet, die sich vom Mantel des Gehäuses (2) im wesentlichen radial in den axialen Durchführungsbereich (9) für das Rohr, Kabel oder dergleichen (T) erstrecken und in axialer Richtung federbar sind.

## Beschreibung

Die Erfindung betrifft eine Brandschutzmanschette für Rohre, Kabel und dergleichen gemäss dem Oberbegriff des Patentanspruchs 1.

Brandschutzmanschetten dienen als Brandschutzelemente bei Mauerdurchführungen in Wänden, Decken oder Böden von Gebäuden. Dort sollen sie bei brennbaren oder schmelzbaren Rohren, Kabeln und dergleichen aus Kunststoff, Glas oder Aluminium die Mauerdurchführung verschliessen, um einen Feurerdurchschlag zu verhindern. Die bekannten Brandschutzmanschetten besitzen üblicherweise eine rohrförmige Gestalt und werden beispielsweise bereits in einer frühen Bauphase als Platzhalter eingesetzt. In diesen Fällen werden sie auf eine Schalung montiert und in den Beton eingegossen. Auf diese Weise ist das Betonwandteil bereits mit einer Mauerdurchführung versehen. Bei der Montage in einer späteren Bauphase oder bei einem nachträglichen Ausbau werden Brandschutzmanschetten als Abschlussmanschetten von einer Seite her in eine zuvor erstellte Maueröffnung eingesteckt. Die bekannten Brandschutzmanschetten weisen ein Gehäuse aus Metall oder Kunststoff auf, in das eine ausreichende Menge einer hitzeintumeszierenden Masse integriert ist, die im Brandfall expandiert und die durch das Wegbrennen oder Wegschmelzen des Rohres oder Kabels entstehende Öffnung verschliesst.

Die im Brandfall entstehende Öffnung zu verschliessen, ist umso schwieriger, je grösser der Durchmesser der zu verschliessenden Öffnung ist und je höher der Druck ist, der durch das Feuer entsteht. Ausserdem muss die Brandschutzmanschette mit der hitzeintumeszierenden Masse im Brandfall gegebenenfalls auch dem Druck des von der Feuerwehr eingesetzten Löschwasserstrahls standhalten. Zu diesem Zweck sind aus dem Stand der Technik bereits Systeme bekannt, bei denen die Intumeszenz der in der Brandschutzmanschette integrierten Masse aktiv durch mechanische Komponenten, wie beispielsweise Federn, Klappen, Glasfasergewebe usw., unterstützt ist. Diese mechanischen Komponenten dienen in erster Linie dazu, die geringe Expansionskraft der hitzeintumeszierenden Massen zu unterstützen oder, da diese meist relativ teuer ist, die Intumeszenzmasse zu reduzieren. Die bekannten mechanischen Hilfen erfüllen ihre Funktion nur bei verhältnismässig kleinen Öffnungsdurchmessern zufriedenstellend. Bei grösseren Durchmessern sind sie relativ unhandlich in der Anwendung und verteuern die Brandschutzmanschette über Gebühr.

Aus der US-A-4,888,925 ist eine manschettenartige Rohrkupplung bekannt, die in eine Maueröffnung eingebracht wird. Die Rohrkupplung weist ein rohrförmiges Innengehäuse aus Kunststoff mit radial in das Innere ragenden Anschlägen für die eingeschobenen, zu kuppelnden Rohre auf. An einem Längsende ist das Innengehäuse von einem metallischen, ringförmigen Mantel umgeben. Der Ringraum zwischen dem Metallmantel und dem Innengehäuse ist mit einer hitzeintumeszierenden Masse ausgefüllt. Vom Gehäusemantel zum rohrförmigen Innengehäuse abragende, radiale Metalllaschen begrenzen den Ringraum am einen Längsende der Rohrkupplung. Die radialen Laschen sollen verhindern, dass die intumeszierende Masse aus dem Ringraum austritt, und dienen zur besseren Wärmeeinleitung im Brandfall, damit die Expansion der hitzeintumeszierenden Masse zuverlässig ausgelöst wird. Im Brandfall brennt das rohrförmige Innengehäuse samt dem eingeschobenen Kunststoffrohr weg und die expandierende Masse soll die entstehende Öffnung abdichten. Während dieser Effekt bei kleineren Durchmessern noch zufriedenstellend funktioniert, treten bei grösseren Durchmessern die bekannten Probleme mit dem im Brandfall herrschenden Feuerdruck und gegebenenfalls dem vom Löschwasserstrahl verursachten Wasserdruck auf. Diese bekannte Rohrkupplung ist nur für Rohre mit dem geforderten Nenndurchmesser geeignet. Für Rohre mit kleineren oder grösseren Durchmessern ist auch eine andere Rohrkupplung erforderlich. Ausserdem handelt es sich bei dieser bekannten Rohrkupplung um keine eigentliche Brandschutzmanschette, da Rohre nicht durch die Vorrichtung geführt werden können. Vielmehr dient die Rohrkupplung nur zur Verbindung der Längsenden von zwei, an entgegengesetzten Längsenden eingeschobenen, einzelnen Rohren.

Aufgabe der vorliegenden Erfindung ist es daher, eine Brandschutzmanschette dahingehend zu verbessern, dass im Brandfall auch Öffnungen grösserer Durchmesser zuverlässig verschliessbar sind. Der Verschluss soll auch grösserem Feuerdruck widerstehen und dem Wasserdruck des von der Feuerwehr eingesetzten Löschwassers standhalten. Die Brandschutzmanschette soll für unterschiedliche Durchmesser von Rohren, Kabeln und dergleichen geeignet sein. Dabei soll die Brandschutzmanschette einfach und kostengünstig in der Herstellung sein.

Die Lösung dieser Aufgaben besteht in einer Brandschutzmanschette mit den im kennzeichnenden Abschnitt des Patentanspruchs 1 angeführten Merkmalen. Bevorzugte Ausführungsvarianten und/oder Weiterbildungen der Erfindung sind Gegenstand der abhängigen Patentansprüche. Die erfindungsgemässe Brandschutzmanschette für ein Rohr, Kabel und dergleichen umfasst ein im wesentlichen rohrförmiges Gehäuse aus Metall, das an einem Längsende einen radial abragenden Anschlussflansch aufweist. Ein axialer Endabschnitt des Gehäuses weist eine hitzeintumeszierende Masse auf, die an der Innenwandung des Gehäuses angeordnet ist und einen axial verlaufenden Durchführungsbereich für das Rohr, Kabel oder dergleichen kreisringförmig umgibt. An dem die hitzeintumeszierende Masse aufweisenden axialen Endabschnitt des Gehäuses sind metallische Lamellen angeordnet, die sich vom Mantel des Metallgehäuses im wesentlichen radial in den Durchführungsbereich für das Rohr, Kabel oder dergleichen erstrecken und in axialer Richtung federbar sind.

Wegen der Federbarkeit der in den Durchführungsbereich ragenden, metallischen Lamellen sind Rohre, Kabel oder dergleichen einfach hindurchschiebbar. Die Lamellen behindern den Einschiebevorgang nicht. Hinsichtlich der Durchmesser der Rohre, Kabel oder dergleichen, die in eine Brandschutzmanschette mit einem vorgegebenen Durchmesser des Durchführungsbereichs einschiebbar sind, besteht ein grosser Spielraum. Die axial federbaren Lamellen legen sich an die Aussenwandung des eingeschobenen Bauteils an und halten es in einer quasi-zentrierten Lage in der Brandschutzmanschette. Im Brandfall, bei dem das eingeschobene Bauteil in der Regel wegbrennt oder wegschmilzt, werden die Lamellen von der intumeszierenden Masse umgeben. Sie nehmen nicht aktiv am Verschluss der Durchgangsöffnung der Brandschutzmanschette teil, sondern bilden, eingebettet in die expandierte Masse, eine Armierung für den durch die Hitzeentwicklung entstehenden Verschlusspfropfen aus expandierter Intumeszenzmasse. Die Armierung verleiht der expandierten Masse eine grössere mechanische Festigkeit, damit sie dem im Brandfall auftretenden Feuerdruck und gegebenenfalls dem durch das eingespritzte Löschwasser ausgeübten Druck besser standhalten kann.

Indem die Lamellen rosettenartig angeordnet und in Umfangsrichtung voneinander beabstandet sind, werden sie bei der Expansion der Intumeszenzmasse noch besser eingebettet. Die expandierende Masse lagert sich in die Zwischenräume zwischen den Lamellen ein und bindet sie noch besser ein. Für die üblicherweise eingesetzten Intumeszenzmassen erweist es sich dabei als zweckmässig, wenn die Lamellen in Umfangsrichtung einen Mindestabstand voneinander aufweisen, der etwa 1 mm bis etwa 8 mm beträgt.

Die Lamellen bestehen vorzugsweise aus einem Federstahl. Dadurch ist sichergestellt, dass beim Durchführen eines Rohres, Kabels oder dergleichen nicht einzelne Lamellen brechen. Die Lamellen aus Federstahl werden beim Einschieben eines Bauteils nur reversibel umgebogen und liegen unter Vorspannung an der Aussenwandung des eingeschobenen Bauteils an. Damit einerseits beim Einschieben eines Bauteils keine allzu grossen Kräfte überwunden werden müssen und andererseits im Brandfall eine ausreichend steife Armierung für die expandierte Intumeszenzmasse vorliegt, weisen die Lamellen aus Federstahl eine Wandstärke von etwa 0,14 mm bis etwa 0,4 mm auf. Bei diesen Wandstärken ist eine ausreichende axiale Federbarkeit gegeben und gleichzeitig auch die Gefahr eines Brechens von einzelnen Lamellen klein gehalten.

Der Grad, in dem die Lamellen beim Einschieben eines Rohres, Kabels oder dergleichen in axialer Richtung deformiert werden, hängt ausser vom Durchmesser des eingeschobenen Rohres auch vom Öffnungsdurchmesser ab, der von den freien Enden der Lamellen berandet wird. Mit Vorteil weisen die Lamellen daher alle die gleiche Länge auf. Dabei begrenzen sie eine Durchgangsöffnung, deren Öffnungsdurchmesser mindestens 10% des Durchmessers des Durchführungsbereichs beträgt.

Aus fertigungstechnischen Gründen erweist es sich von Vorteil, wenn die Lamellen an einem metallischen Ringkörper ausgebildet sind, der in das Gehäuse einsetzbar ist. Vorzugsweise sind die Lamellen dabei einstückig mit dem metallischen Ringkörper ausgebildet.

Im folgenden wird die Erfindung unter Bezugnahme auf ein in den Fig. dargestelltes Ausführungsbeispiel einer Brandschutzmanschette näher erläutert. Es zeigen in zum Teil schematischer und nicht massstabsgetreuer Darstellung:
- Fig. 1: eine teilweise geschnittene Brandschutzmanschette gemäss der Erfindung;
- Fig. 2: einen metallischen Ringkörper mit integral ausgebildeten Lamellen; und
- Fig. 3: eine perspektivische Ansicht der Brandschutzmanschette aus Fig. 1 mit einem durchgeführten Rohr.

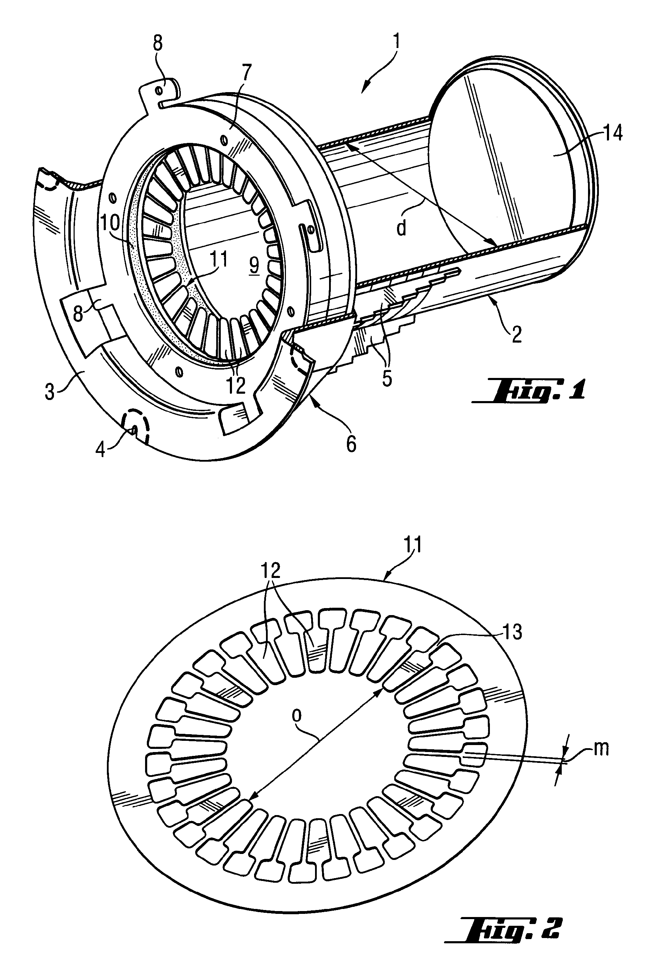

Die in Fig. 1 dargestellte Brandschutzmanschette trägt gesamthaft das Bezugszeichen 1. Sie umfasst ein rohrförmiges Gehäuse 2 aus Metall, an dessen einem Endabschnitt 6 ein Anschlussflansch 3 radial abragt. Der Anschlussflansch 3 ist mit Anschlusseinrichtungen 4, beispielsweise Bohrungen oder dergleichen, versehen, welche es ermöglichen, die Brandschutzmanschette 1 an einem Schalungsbrett oder an einer Wand zu befestigen. An der Aussenseite des rohrförmigen Gehäuses 2 sind radial abragende Rippen 5 vorgesehen, die als Drehsicherung für die Brandschutzmanschette 1 dienen. Am axialen Endabschnitt 6 ist ein Abschlussteil 7 lösbar mit dem Gehäuse 2 verbunden. Dazu ragen vom Umfang des Abschlussteils 7 Riegellaschen 8 radial ab, die in korrespondierende Aussparungen im Anschlussflansch 3 eingreifen und hinter Schultern verriegeln. Im axialen Endabschnitt 6 des rohrförmigen Gehäuses 2 ist eine hitzeintumeszierende Masse 10 vorgesehen. Die hitzeintumeszierende Masse 10 ist an der Innenwandung des rohrförmigen Gehäuses 2 angeordnet und umgibt einen axialen Durchführungsbereich 9 des rohrförmigen Gehäuses 2 ringförmig. Der über die Innenwandung des Gehäuses 2 gemessene Durchmesser des Durchführungsbereichs 9 ist mit dem Bezugszeichen d versehen. In Fig. 1 ist der dem Anschlussflansch 3 gegenüberliegende Endabschnitt des rohrförmigen Gehäuses 2 mit einem Deckel 14 verschlossen dargestellt. Der Deckel 14 ist optional ansteckbar, beispielsweise wenn die Brandschutzmanschette 1 erst in einer späteren Ausbauphase mit einem Rohr bestückt werden soll und verhindert werden soll, dass der Durchführungsbereich 9 verunreinigt wird.

Am die intumeszierende Masse aufnehmenden axialen Endabschnitt 6 des rohrförmigen Gehäuses 2 sind axial federbare Lamellen 12 angeordnet, die sich in radialer Richtung erstrecken und in den Durchführungsbereich 9 für ein Rohr, Kabel oder dergleichen ragen.

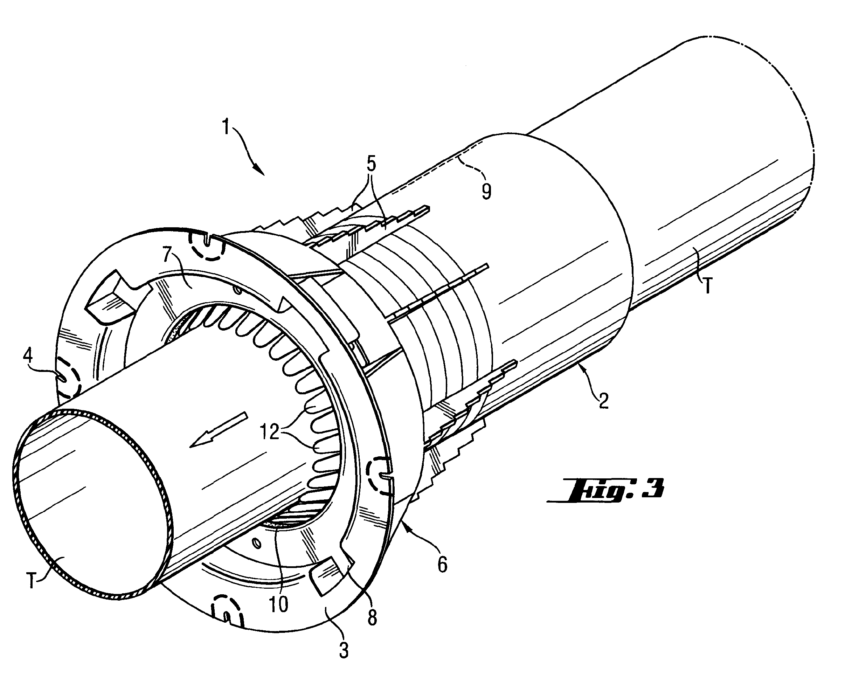

Fig. 2 zeigt einen Ringkörper 11 mit einer Anzahl von rosettenartig angeordneten Lamellen 12, die vom Umfang radial nach innen abragen. Der Ringkörper 11 besteht aus einem Federstahl. Die Lamellen 12 sind integral mit dem Ringkörper 11 ausgebildet und in axialer Richtung federbar. Dazu sind die Lamellen 12 über ein Biegegelenk 13 mit dem Umfang des Ringkörpers 11 verbunden. Die Wandstärke der Lamellen 12 beträgt etwa 0,15 mm bis etwa 0,4 mm. Die Lamellen 12 weisen voneinander einen Mindestabstand m auf, der etwa 1 mm bis etwa 8 mm beträgt. Die Lamellen 12 sind alle gleich lang und lassen einen Öffnungsquerschnitt o frei, der wenigstens etwa 10% des Durchmessers d des axialen Durchführungsbereichs 9 (Fig. 1) beträgt. Der Ringkörper 11 mit den axial federbaren Lamellen 12 wird im Endabschnitt 6 des rohrförmigen Gehäuses 2 montiert und durch das Abschlussteil 7 fixiert. Er befindet sich in unmittelbarer Nachbarschaft zu der hitzeintumeszierenden Masse, die gleichfalls im Endabschnitt 6 des Gehäuses 2 angeordnet ist (Fig. 1).

Fig. 3 zeigt die erfindungsgemässe Brandschutzmanschette 1 aus Fig. 1 mit einem eingeschobenen Rohr T, das beispielsweise aus Kunststoff besteht. Die einzelnen Elemente der Brandschutzmanschette 1 tragen die gleichen Bezugszeichen wie in Fig. 1. Das Rohr T wird von der dem Endabschnitt 6 des Gehäuses 2 gegenüberliegenden Seite eingeschoben. Dabei werden die federbaren Lamellen 12 dem Durchmesser des Rohres T entsprechend umgebogen. Die Lamellen 12 drücken gegen die Aussenfläche des Rohres T und zentrieren dieses innerhalb der Brandschutzmanschette 1. Im Brandfall brennt oder schmilzt das Rohr T weg und die intumeszierende Masse 10, die an der Innenwandung des Endabschnitts 6 angeordnet ist, expandiert. Die expandierende Masse 10 dringt durch die Zwischenräume zwischen den Lamellen 12 und lagert sie in sich ein. Auf diese Weise eingebettet bilden die Lamellen 12 eine Armierung für die expandierte Intumeszenzmasse 10, welche den axialen Durchführungsbereich 9 des Gehäuses 2 verschliesst.

## Patentansprüche

1. Brandschutzmanschette für ein Rohr, Kabel und dergleichen mit einem im wesentlichen rohrförmigen Gehäuse (2) aus Metall, das an einem Längsende einen radial abragenden Anschlussflansch (3) aufweist, und einer hitzeintumeszierenden Masse (10), die an der Innenwandung eines Endabschnitts (6) des rohrförmigen Gehäuses (2) angeordnet ist und einen axial verlaufenden Durchführungsbereich (9) für das Rohr, Kabel oder dergleichen (T) kreisringförmig umgibt, **dadurch gekennzeichnet**, dass an dem die hitzeintumeszierende Masse (10) aufweisenden axialen Endabschnitt (6) des Gehäuses (2) metallische Lamellen (12) angeordnet sind, die sich vom Mantel des Gehäuses (2) im wesentlichen radial in den axialen Durchführungsbereich (9) für das Rohr, Kabel oder dergleichen (T) erstrecken und in axialer Richtung federbar sind.

2. Brandschutzmanschette nach Anspruch 1, dadurch gekennzeichnet, dass die Lamellen (12) rosettenartig angeordnet und in Umfangsrichtung voneinander beabstandet sind.

3. Brandschutzmanschette nach Anspruch 2, dadurch gekennzeichnet, dass die Lamellen (12) in Umfangsrichtung einen Mindestabstand (m) voneinander aufweisen, der etwa 1 mm bis etwa 8 mm beträgt.

4. Brandschutzmanschette nach einem der vorangehenden Ansprüche, dadurch gekennzeichnet, dass die Lamellen (12) aus einem Federstahl bestehen.

5. Brandschutzmanschette nach Anspruch 4, dadurch gekennzeichnet, dass die Lamellen (12) eine Wandstärke von etwa 0,14 mm bis etwa 0,4 mm aufweisen.

6. Brandschutzmanschette nach einem der vorangehenden Ansprüche, dadurch gekennzeichnet, dass alle Lamellen (12) die gleiche Länge aufweisen und eine Durchgangsöffnung begrenzen, deren Öffnungsdurchmesser (o) mindestens 10% des Durchmessers (d) des axialen Durchführungsbereichs (9) beträgt.

7. Brandschutzmanschette nach einem der vorangehenden Ansprüche, dadurch gekennzeichnet, dass die Lamellen (12) an einem metallischen Ringkörper (11) ausgebildet sind, der in das Gehäuse (2) einsetzbar ist.

8. Brandschutzmanschette nach Anspruch 7, dadurch gekennzeichnet, dass die Lamellen (12) einstückig mit dem metallischen Ringkörper (11) ausgebildet sind.
